# EUROPÄISCHE PATENTSCHRIFT

(11) **EP 0 743 900 B1**
(45) Veröffentlichungstag und Bekanntmachung des Hinweises auf die Patenterteilung: **10.12.1997**
(21) Anmeldenummer: 95905120.2
(22) Anmeldetag: 05.01.1995
(51) Int. Cl.: B32B 5/26, A47C 31/00

(54) **TEXTILES FLÄCHENGEBILDE FÜR SITZBEZÜGE ODER POLSTER, INSBESONDERE FÜR SITZE IN KRAFTFAHRZEUGEN**
FLAT TEXTILE STRUCTURE FOR SEAT COVERING OR UPHOLSTERY, ESPECIALLY FOR MOTOR VEHICULE SEATS
STRUCTURE TEXTILE SUPERFICIELLE POUR REVETEMENTS DE SIEGES OU REMBOURRAGES, NOTAMMENT POUR SIEGES DE VEHICULES A MOTEUR

(30) Priorität: 24.01.1994 DE 9401121 U
(43) Veröffentlichungstag der Anmeldung: 27.11.1996
(73) Patentinhaber: Lohmann GmbH & Co. KG, 56567 Neuwied (DE)
(72) Erfinder: ECKEL, Petra, D-56581 Melsbach (DE); PELZ, Edgar, D-73730 Esslingen (DE); POTZLER, Bernd, D-56566 Neuwied (DE)
(74) Vertreter: Flaccus, Rolf-Dieter, Dr.
(86) Internationale Anmeldenummer: EP9500030
(87) Internationale Veröffentlichungsnummer: WO9519882

(56) Entgegenhaltungen:
- GB-A- 2 138 745

## Beschreibung

Die Erfindung betrifft ein textiles Flächengebilde für Sitzbezüge oder Polster, insbesondere für Sitze in Kraftfahrzeugen, in besonderer Weise ausgebildet für einen klimatisierenden Effekt.
Unter einem klimatisierenden Effekt für Sitzbezüge oder Polster in Kraftfahrzeugen wird verstanden, daß diese bei relativ hoher Luftdurchlässigkeit eine Wärmeleitfähigkeit zur Ableitung von Köroerwärme, Kapillarvirkung für Feuchtigkeitstransport und hinterlüftende Eigenschaft aufweisen sollen.
Polstermaterialien für Sitze in Kraftfahrzeugen sind beim Stand der Technik mit verschiedenen Materialkompositionen und Konstruktionen im Einsatz. Die günstigsten und daher am häufigsten eingesetzten Materialien sind PUR-Schäume in verschiedenen Dichten. Daneben werden in Fahrzeugen der höheren Preisklasse Konstruktionen aus PUR-Schaum und Gummihaar sowie Mischungen aus PES-Fasern und tierischen Fasern (Wolle) in Verbindung mit PUR-Schaum eingesetzt. Eine weitere Möglichkeit ist die Verwendung von Blockwatten aus PES/CoPES-Thermofusionsvliesstoff als Polstermaterial (VDI-Kongress "Textilien im Automobil", 14.-15.10.1992, S. 88 ff).
Eine technische Variante ist eine Sitzkonstruktion mit Hinterlüftung und zusätzlicher Gore-tex ® Membrane (Technische Textilien, Juli/August 1993, S. T172).

Nachteile der bisher verwendeten Sitzkonstruktionen sind darin zu sehen, daß weder PUR-Schäume noch Gummihaar selbst unter günstigsten Bedingungen wie köroerliche Ruhe und 20°C Umgebungstemperatur die zur Ableitung von Köroerwärme erforderliche Wärmeleitfähigkeit aufweisen. Zusätzlich erschweren die genannten Materialien infolge geringer Kapillarwirkung den Feuchtigkeitstransport. Höherwertige Materialkompositionen oder Sitzkonstruktionen sind in der Herstellung äußerst aufwendig und erschweren zudem ein Recycling. Gerade die Wiederverwertung hat zur Zeit einen hohen Stellenwert, weil die Entsorgungskapazitäten bei steigenden Kosten geringer werden.

Vollsitzmaterialien aus PES/CoPES-Thermofusionsvlies hat neben dem Vorteil einer hohen Luftdurchlässigkeit den großen Nachteil einer aufwendigen Herstellung. Dabei wird, um hohe Rückstellkräfte zu erreichen, Blockwatte in unterschiedlichen Lagen um 90° versetzt aufeinander gelegt und veroreßt. Anders modifizierte Materialien befinden sich noch im Entwicklungsstadium.

Der Erfindung liegt die Aufgabe zugrunde, ein textiles Flächengebilde für Sitzbezüge oder Polster, insbesondere für Sitze in Kraftfahrzeugen anzugeben, welches in besonderer Weise für einen klimatisierenden Effekt ausgebildet ist, dabei einfach in der Herstellung und wirkungsvoll im Einsatz sowie mit Hilfe einer problemlosen Entsorgung durch Eignung für Recycling wiederverwertbar ist und bei hoher Luftdurchlässigkeit genügend Wärmeleitfähigkeit zur Ableitung von Köroerwärme sowie eine zufriedenstellende Kapillarwirkung für Feuchtigkeitstransport aufweist und eine wirtschaftliche Herstellung ermöglicht.
Die Lösung der gestellten Aufgabe gelingt bei einem textilen Flächengebilde der eingangs genannten Art mit der Erfindung dadurch, daß es aus mehreren Lagen textiler Flächengebilde in sandwichartigem Aufbau zusammengesetzt ist und folgende Lagen aufweist:
a) eine erste köroerzugewandte Lage mit feuchtigkeitstransportierender bzw. -verteilender Eigenschaft;
b) eine darunter befindliche zweite Lage mit ebenfalls feuchtigkeitstransportierender bzw. -verteilender Eigenschaft;
c) eine darunter befindliche dritte Lage mit saugender und speichernder Eigenschaft;
d) eine darunter befindliche vierte Lage mit polsternder und hinterlüftender Eigenschaft;

Eine Ausgestaltung sieht vor, daß das textile Flächengebilde zusätzlich zuunterst eine fünfte Lage mit stabilisierender Eigenschaft aufweist.
Weitere vorteilhafte Eigenschaften sind entsprechend den Merkmalen der Unteransprüche vorgesehen. Dabei kann die erste Lage ein Gewebe, Gestrick oder Gewirke aus synthetischen Stapelfasern oder Filamenten sein. Vorzugsweise handelt es sich dabei um ein PES-Gewirke.
Die zweite Lage kann ein Nadelvliesstoff aus synthetischen Stapelfasern sein, vorzugsweise aus PES-Nadelvliesstoff .
Die dritte Lage kann ein Nadelvliesstoff aus synthetischen und/oder natürlichen Stapelfasern sein. Bevorzugt ist sie ein CV-Nadelvliesstoff.
Die vierte Lage kann ein Thermofusionsvliesstoff aus synthetischen Stapelfasern sein, bevorzugt aus PES/CoPES.
Die fünfte Lage kann ein Gewirke, Gestrick, Gewebe oder Vliesstoff und bevorzugt ein PES-Spinnvliesstoff sein. Erfindungsgemäß können die vorgenannten Lagen des textilen Flächengebildes durch Reib- und Formschluß, kohäsiv und/oder adhäsiv und vorzugsweise delaminierbar miteinander verbunden sein.
Weiterhin kann vorgesehen sein, daß die erste Lage und die fünfte Lage auf die Zwischenlagen 2 bis 4 mit Hilfe einer Paste, eines Pulvers, eines Hotmelts und/oder eines Klebevliesstoffes vorzugsweise aus CoPES mit einem geeigneten Verfahren (z.B. Flachbettkaschieranlage etc.) aufzukaschieren sind.

Die zweite Lage und die dritte Lage sind vorzugsweise durch einseitige Vernadelung mechanisch miteinander verbunden. Die vierte, aus einem Thermofusionsvliesstoff bestehende PES/CoPES-Lage ist mit gleicher Vernadelungsrichtung mit dem CV-Nadelvliesstoff der dritten Lage verbunden.
Mit dem erfindungsgemäßen Aufbau des textilen Flächengebildes wird erreicht, daß die körperzugewandte erste Lage und die zweite Lage der textilen Flächengebilde mit feuchtigkeitstransportierender bzw. -verteilender Funktion und die dritte Lage mit saugender und speichernder Funktion und die vierte Lage mit polsternder und hinterlüftender Funktion ausgebildet sind. Das sandwichartige Flächengebilde kann zusätzlich durch eine fünfte Lage stabilisiert sein, wobei mit Vorteil durch den erfindungsgemäßen Verbund der Lagen das Material delaminierbar ist und damit problemlos recycelt werden kann.

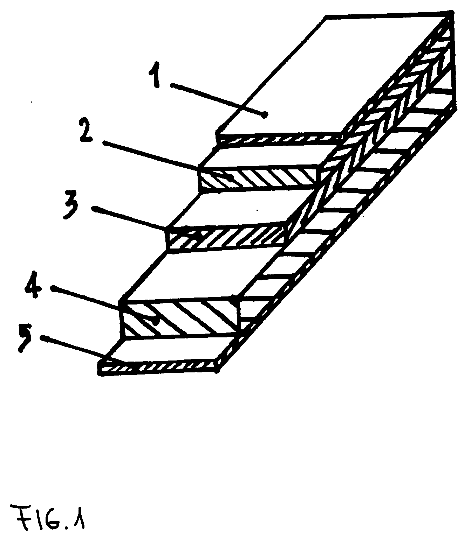

Ein Ausführungsbeispiel der Erfindung ist rein schematisch in der Zeichnung dargestellt. Das mehrlagige, sandwichartige Flächengebilde besteht aus einem PES-Nadelvliesstoff 2 und einem CV-Nadelvliesstoff 3, welche durch einseitige Vernadelung mechanisch miteinander verbunden sind. Ein Thermofusionsvliesstoff aus PES/CoPES 4 ist mit gleicher Vernadelungsrichtung aufgrund eines weiteren Verarbeitungsschrittes mit dem CV-Nadelvliesstoff 3 verbunden. Ein PES-Gewirke 1 und ein PES-Spinnvlies 5 sind auf die Ober- 2 und Unterseite 4 der zwischenlagen 2 bis 4 mit Hilfe entsprechender Medien und Verfahren aufkaschiert. Das erfindungsgemäß mehrlagige sandwichartige Flächengebilde 1 bis 5 bereitet in der Herstellung keine Probleme und ist daher vergleichsweise günstig herstellbar. Bedingt durch die Fahrzeugkonstruktion (flach geneigte Front-, Heck- und Seitenscheiben) entsteht im Fahrzeuginnenraum eine höhere Temperatur, die durch Erhöhung der Schweißabsonderung der Fahrzeuginsassen, insbesondere von Säuglingen und Kleinkindern ausgeglichen wird. Hierbei wirkt es sich sehr vorteilhaft aus, daß die Kapillarvirkung des Fasermaterials durch die Art der Herstellung verstärkt ist, wodurch der Feuchtigkeitstransport verbessert wird und dadurch das Sitzklima den erhöhten Anforderungen angepaßt ist. Infolge der vorgenannten Rohstoffauswahl und des Herstellungsverfahrens ist eine umweltgerechte Entsorgung oder Wiederverwertung durch eine Delaminierung der einzelnen miteinander verbundenen Lagen möglich. Insofern erfüllt die Erfindung in idealer Weise die eingangs genannte Aufgabe.

## Patentansprüche

1. Textiles Flächengebilde für Sitzbezüge oder Polster, insbesondere für Sitze in Kraftfahrzeugen, in besonderer Weise ausgebildet für einen klimatisierenden Effekt, dadurch gekennzeichnet, daß es aus mehreren Lagen textiler Flächengebilde in sandwichartigem Aufbau zusammengesetzt ist und folgende Lagen aufweist:
a) eine erste körperzugewandte Lage (1) mit feuchtigkeitstransportierender bzw. -verteilender Eigenschaft;
b) eine darunter befindliche Lage (2) mit ebenfalls feuchtigkeitstransportierender bzw. -verteilender Eigenschaft;
c) eine darunter befindliche dritte Lage (3) mit saugender und speichernder Eigenschaft;
d) eine darunter befindliche vierte Lage (4) mit polsternder und hinterlüftender Eigenschaft.

2. Flächengebilde nach Anspruch 1, dadurch gekennzeichnet, daß es zusätzlich zuunterst eine fünfte Lage (5) mit stabilisierender Eigenschaft aufweist.

3. Flächengebilde nach Anspruch 1, dadurch gekennzeichnet, daß die erste Lage (1) ein Gewebe, Gestrick oder Gewirke aus synthetischen Stapelfasern und/oder Filamenten ist.

4. Flächengebilde nach Anspruch 3, dadurch gekennzeichnet, daß die erste Lage (1) ein PES-Gewirke ist.

5. Flächengebilde nach Anspruch 1, dadurch gekennzeichnet, daß die zweite Lage (2) ein Nadelvliesstoff aus synthetischen Stapelfasern und vorzugsweise ein PES-Nadelvliesstoff ist.

6. Flächengebilde nach Anspruch 1, dadurch gekennzeichnet, daß die dritte Lage (3) ein Nadelvliesstoff aus synthetischen und/oder natürlichen Stapelfasern und bevorzugt ein CV-Nadelvliesstoff ist.

7. Flächengebilde nach Anspruch 1, dadurch gekennzeichnet, daß die vierte Lage (4) ein Thermofusionsvliesstoff aus synthetischen Stapelfasern ist und bevorzugt aus PES/CoPES besteht.

8. Flächengebilde nach einem oder mehreren der Ansprüche 2 bis 7, dadurch gekennzeichnet, daß die fünfte Lage (5) aus einem Gewirke, Gestrick, Gewebe oder Vliesstoff besteht und bevorzugt ein PES-Spinnvlies ist.

9. Flächengebilde nach einem oder mehreren der vorhergehenden Ansprüche, dadurch gekennzeichnet, daß die Lagen (1) bis (5) durch Reib- und Formschluß, kohäsiv und/oder adhäsiv und vorzugsweise delaminierbar miteinander verbunden sind.

10. Flächengebilde nach Anspruch 9, dadurch gekennzeichnet, daß die erste Lage (1) und die fünfte Lage (5) auf die Zwischenlagen (2) bis (4) mit Hilfe einer Pastenpunktbeschichtung in einer Flachbettkaschieranlage aufkaschiert sind.

11. Flächengebilde nach Anspruch 9, dadurch gekennzeichnet, daß die zweite Lage (2) und die dritte Lage (3) durch einseitige Vernadelung mechanisch miteinander verbunden sind.

12. Flächengebilde nach Anspruch 9, dadurch gekennzeichnet, daß die dritte Lage (3) mit gleicher Vernadelungsrichtung mit dem Nadelvliesstoff der vierten Lage (4) mechanisch verbunden ist.

## Claims

1. A textile fabric for seat covers or cushions, in particular for seats in motor vehicles, particularly designed for achieving a climatizing effect, characterized in that it is composed of several plies of textile fabrics in a sandwich-like arrangement and comprises the following plies:
a) a first ply (1) facing towards the body, and which has moisture-transporting and moisture distributing properties, respectively;
b) a ply (2) located thereunder, likewise having moisture-transporting and moisture distributing properties, respectively;
c) a third ply (3) located thereunder, having absorbent and storing properties;
d) a fourth ply (4) located thereunder, having cushioning and rear-ventilating properties.

2. The fabric according to claim 1, characterized in that it comprises and additional fifth ply (5) right at the bottom, having a stabilizing property.

3. The fabric according to claim 1, characterized in that the first ply (1) is a woven or knitted fabric of synthetic staple fibres and/or filaments.

4. The fabric according to claim 3, characterized in that the first ply (1) is a polyester knitted fabric.

5. The fabric according to claim 1, characterized in that the second ply (2) is a needle-punched nonwoven of synthetic staple fibres and preferably a polyester needle-punched nonwoven.

6. The fabric according to claim 1, characterized in that the third ply (3) is a needle-punched nonwoven of synthetic and/or natural staple fibres and preferably a viscose rayon needle-punched nonwoven.

7. The fabric according to claim 1, characterized in that the fourth ply (4) is a thermobonded nonwoven of synthetic staple fibres and preferably consists of polyester/copolyester.

8. The fabric according to one or more of claims 2 to 7, characterized in that the fifth layer (5) consists of a knitted fabric, woven fabric or nonwoven and is preferably a polyester spunbonded nonwoven.

9. The fabric according to one or more of the preceding claims, characterized in that the plies (1) to (5) are bonded to each other by frictional and form closure, cohesively and/or adhesively, and preferably delaminatably.

10. The fabric according to claim 9, characterized in that the first ply (1) and the fith ply (5) are laminated onto the intermediate plies (2) to (4) by paste dot coating in a flat bed laminating unit.

11. The fabric according to claim 9, characterized in that the second ply (2) and the third ply (3) are bonded to each other by one-sided needle-punching.

12. The fabric according to claim 9, characterized in that the third ply (3) is mechanically bonded to the needle-punched nonwoven of the fourth ply (4), with the same direction of needling.

## Revendications

1. Structure textile superficielle pour revêtements de sièges ou rembourrages, notamment pour sièges de véhicules à moteur, exécutée d'une manière particulière afin d'obtenir un effet climatisant, caractérisée en ce qu'elle est composée de plusieurs couches de structures textiles superficielles assemblées dans une construction en sandwich et comprend les couches suivantes :
a) une première couche (1) située du côté du corps qui a la propriété de transporter resp. répartir l'humidité;
b) une couche (2) située en dessous et possédant également la propriété de transporter resp. répartir l'humidité;
c) une troisième couche (3) située en dessous qui a une propriété d'absorption et d'accumulation;
d) une quatrième couche (4) située en dessous qui a une propriété de rembourrage et d'aération de l'arrière de la structure.

2. Structure superficielle selon la revendication 1, caractérisée en ce qu'elle comprend, en plus, sous toutes les autres couches, une cinquième couche (5) qui a une propriété stabilisante.

3. Structure superficielle selon la revendication 1, caractérisée en ce que la première couche (1) est un tissu, un tricot ou un tissu à mailles fait de fibres textiles coupées et/ou filaments synthétiques.

4. Structure superficielle selon la revendication 3, caractérisée en ce que la première couche (1) est un tissu à mailles en polyester.

5. Structure superficielle selon la revendication 1, caractérisée en ce que la seconde couche (2) est une étoffe non-tissée aiguilletée faite de fibres textiles coupées synthétiques et, de préférence, une étoffe non-tissée aiguilletée en polyester.

6. Structure superficielle selon la revendication 1, caractérisée en ce que la troisième couche (3) est une étoffe non-tissée aiguilletée faite de fibres textiles coupées synthétiques et/ou naturelles et, de préférence, une étoffe non-tissée aiguilletée en chlorure de vinyle.

7. Structure superficielle selon la revendication 1, caractérisée en ce que la quatrième couche (4) est une étoffe non-tissée thermofusible faite de fibres textiles coupées synthétiques et est formée, de préférence, de polyester/co-polyester.

8. Structure superficielle selon l'une ou plusieurs des revendications 2 à 7, caractérisée en ce que la cinquième couche (5) est formée par un tissu à mailles, un tricotage, un tissu ou une étoffe non-tissée et est, de préférence, un non-tissé par filature directe en polyester.

9. Structure superficielle selon l'une ou plusieurs des revendications précédentes, caractérisée en ce que les couches (1) à (5) sont reliées les unes aux autres par conjugaison de forme et assemblage par friction, par cohésion et/ou adhésion et, de préférence, de manière à pouvoir être déstratifiées.

10. Structure superficielle selon la revendication 9, caractérisée en ce que la première couche (1) et la cinquième couche (5) sont laminées sur les couches intermédiaires (2) à (4) dans un dispositif de laminage rectiligne à l'aide d'un enduit ponctuel de pâte.

11. Structure superficielle selon la revendication 9, caractérisée en ce que la seconde couche (2) et la troisième couche (3) sont reliées les unes aux autres mécaniquement par aiguilletage sur un côté.

12. Structure superficielle selon la revendication 9, caractérisée en ce que la troisième couche (3) est reliée mécaniquement à l'étoffe non-tissée aiguilletée de la quatrième couche (4) avec la même direction d'aiguilletage.
